# EUROPEAN PATENT SPECIFICATION

(11) **EP 2 437 563 B1**
(45) Date of publication and mention of the grant of the patent: **26.10.2016**
(21) Application number: 10793546.2
(22) Date of filing: 07.06.2010
(51) Int. Cl.: H04W 76/04, H04W 72/04, H04W 48/12, H04L 5/00, H04W 52/02, H04W 72/12

(54) **METHOD, DEVICE AND SYSTEM FOR OBTAINING AND SCHEDULING UPLINK RESOURCE**
VERFAHREN, VORRICHTUNG UND SYSTEM ZUR GEWINNUNG UND PLANUNG VON UPLINK-RESSOURCEN
PROCÉDÉ, DISPOSITIF ET SYSTÈME D OBTENTION ET DE PROGRAMMATION DE RESSOURCE EN VOIE MONTANTE

(30) Priority: 30.06.2009 CN 200910158458
(43) Date of publication of application: 04.04.2012
(60) Divisional application: 16183657.2
(73) Proprietor: Huawei Technologies Co., Ltd., Longgang District Shenzhen, Guangdong 518129 (CN)
(72) Inventor: GAO, Wen, Shenzhen Guangdong 518129 (CN); ZENG, Qinghai, Shenzhen Guangdong 518129 (CN)
(74) Representative: Pfenning, Meinig & Partner mbB
(86) International application number: PCT/CN2010/073618
(87) International publication number: WO 2011/000251

(56) References cited:
- WO-A1-2009/022790
- WO-A1-2010/078962
- CN-A- 101 098 294
- CN-A- 101 442 818
- CN-A- 101 765 184
- US-A1- 2008 186 892
- US-A1- 2008 186 892
- CMCC: "Resource Allocation and PDCCH Design Issues in Carrier Aggregation", 3GPP DRAFT; R1-090924, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090206, 6 February 2009 (2009-02-06), XP050318765, [retrieved on 2009-02-06]
- ITRI: "Discussion of DRX in Carrier Aggregation", 3GPP DRAFT; R2-093915_DISCUSSION OF DRX IN CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050352108, [retrieved on 2009-06-24]
- NOKIA ET AL: "L1 control signaling with carrier aggregation in LTE-Advanced", 3GPP DRAFT; R1-083730, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050317069, [retrieved on 2008-09-24]
- NOKIA, NOKIA SIEMENS NETWORKS: 'L1 control signaling with carrier aggregation in LTE-Advanced' 3GPP TSG-RAN WG1 MEETING #54BIS; R1-083730 29 September 2008 - 03 October 2008, PRAGUE, CZECH REPUBLIC, XP050317069

## Description

### FIELD OF THE INVENTION

The present invention relates to Long Term Evolution (LTE) technologies, and in particular, to a method for obtaining uplink resources, a method for scheduling uplink resources, an apparatus, and a system.

### BACKGROUND OF THE INVENTION

The maximum bandwidth in an LTE system is 20 Mbps. If a Discontinuous Reception (DRX) mode is configured on a connected User Equipment (UE), the UE needs to keep in the active state after sending a Scheduling Request (SR), so as to monitor the Physical Downlink Control Channel (PDCCH) until obtaining valid uplink scheduling resources such as an Uplink (UL) Grant.

An Advanced LTE (LTE-A) system is an extension and enhancement of the LTE system. To extend the maximum bandwidth to 100 Mbps, a Carrier Aggregation (CA) technology is being developed for the LTE-A system. The CA technology aggregates carriers in different bands into the maximum 100 Mbps bandwidth so that the UE of the LTE-A capable of sending or receiving signals at more than 20 Mbps can receive or send data on multiple Component Carriers (CCs) simultaneously.

The bandwidth of each CC in the LTE-A system is not greater than 20 Mbps, and each CC has an independent PDCCH and an independent Physical Uplink Control Channel (PUCCH). If the UE configures the DRX mode on multiple CCs, after the UE that needs to send uplink data sends an SR to an Evolved NodeB (eNB), the UE keeps in the active state on all CCs configured with the DRX mode to monitor the PDCCH scheduling according to the processing mode in the LTE system, which consumes power of the UE massively.

Document "CMCC: "Resource Allocation and PDCCH Design Issues in Carrier Aggregation", 3GPP DRAFT; R1-090924, 6 February 2009, XP050318765" discloses resource allocation and PDCCH design issues in carrier aggregation. Carrier aggregation is widely discussed as a potential technology to support wider bandwidth (up to 100MHz) in LTE-Advanced. In the previous RAN WG1 #55b meetings, many options for the downlink control signalling have been introduced and studied, which are listed as follows. In option 3, all the PDCCHs of a UE are transmitted on one component carrier. However, the associated component carrier with each PDCCH needs to be indicated. It is recited to monitor and CQT report on as few component carriers as possible per UE; and save the PDCCH overhead under most PDCCH design options by restricting the resource allocation indication to as few component carriers as possible. This is important if the number of UEs is large, especially when larger than that usually supported by the LTE system. For example, consider there are 30 UEs in the system with two component carriers. By resource allocation (RA) strategy 1, each UE is scheduled to only one component carrier.

Document "ITRI: "Discussion of DRX in Carrier Aggregation", 3GPP DRAFT; R2-093915_DISCUSSION OF DRX IN CARRIER AGGREGATION; 24 June 2009, XP050352108" discloses discussion of DRX in carrier aggregation. The presented contribution discusses three candidates of DRX operation in carrier aggregation proposed in the RAN2#66 meeting: 1) identical DRX operation, 2) independent DRX operation and 3) anchor carrier based DRX operation. It was suggested that only one of the configured CCs performs the DRX operation and the others stay in sleeping duration. Upon the huge data arrival, the eNB may use a dedicated control signaling to notify the UE activating other CCs. Similar to the identical DRX operation, only one DRX configuration is required, and the corresponding configuration messages in the current Rel-8 specification are not required to be changed. On the other hand, since the activated CCs may be dynamically controlled, it is fast to configure extra bandwidth upon huge amount of data arrival. In addition, because the UE only monitors the PDCCH on the anchor CC, this operation can greatly save UE's energy from listening on other CCs. Only when the high bandwidth scenario is configured, the UE requires monitoring the PDCCH on other.

### SUMMARY OF THE INVENTION

Embodiments of the present invention provide a method for obtaining uplink resources, a method for scheduling uplink resources, an apparatus, and a system.

An embodiment of the present invention provides a method for obtaining uplink resources, implemented by a UE, where the method includes: sending, by the UE, a Scheduling Request (SR) to an evolved NodeB (eNB) through a dedicated SR resource; and monitoring, by the UE, a Physical Downlink Control Channel (PDCCH) on set Component Carriers (CCs) and receiving, by the UE, uplink scheduling resources after sending the SR to the eNB through the dedicated SR resource, where the set CCs include any one or combination of the following items: a CC for sending the SR, or an anchor CC, or CCs not configured with a Discontinuous Reception (DRX) mode, or a preconfigured CC; and after receiving, by the UE, the uplink scheduling resources, the method further comprises: starting, by the UE, a DRX inactivity timer for all or part of CCs in a CC group to receive a subsequent new uplink scheduling resource.

An embodiment of the present invention also provides a UE, including: a sending unit, configured to send a Scheduling Request (SR) to an evolved NodeB (eNB) through a dedicated SR resource; and a receiving unit, configured to: monitor a Physical Downlink Control Channel (PDCCH) on set Component Carriers (CCs) and receive an uplink scheduling resource after the sending unit sending the SR to the eNB through the dedicated SR resource, where the set CCs include any one or combination of the following items: a CC for sending the SR, or an anchor CC, or CCs not configured with a Discontinuous Reception (DRX) mode, or a preconfigured CC; and a timer starting unit, configured to start a DRX inactivity timer for all or part of CCs in a CC group after the receiving unit receives the uplink scheduling resources to receive a subsequent new uplink scheduling resource.

An embodiment of the present invention also provides a communication system, including the foregoing UE.

In the embodiments of the present invention, the uplink resources are scheduled on the set CCs, and therefore, the UE does not consume too much power when monitoring the PDCCH scheduling, and the power waste is avoided.

### BRIEF DESCRIPTION OF THE DRAWINGS

To illustrate the technical solutions in the embodiments of the present invention or in the prior art more clearly, the following outlines the accompanying drawings for describing the embodiments of the present invention. Apparently, the accompanying drawings in the following description are illustrative and not exhaustive, and persons of ordinary skill in the art can derive other drawings from the accompanying drawings without creative efforts.
FIG. 1 is a flowchart of a method according to a first embodiment of the present invention;
FIG. 2 is a flowchart of a method according to a second embodiment of the present invention;
FIG. 3 is a flowchart of a method according to a third embodiment of the present invention;
FIG. 4 is a block diagram of a UE according to a fourth embodiment of the present invention;
FIG. 5 is a block diagram of an eNB according to a fifth embodiment of the present invention; and
FIG. 6 is a schematic diagram of a communication system according to an embodiment of the present invention.

### DETAILED DESCRIPTION OF THE EMBODIMENTS

The following detailed description is given with reference to the accompanying drawings to provide a clear and thorough understanding of the present invention. Evidently, the drawings and the detailed description are merely representative of exemplary embodiments of the present invention, and the embodiments are illustrative in nature and not exhaustive. All other embodiments, which can be derived by those of ordinary skill in the art from the embodiments given here without creative efforts, shall fall within the scope of the present invention.

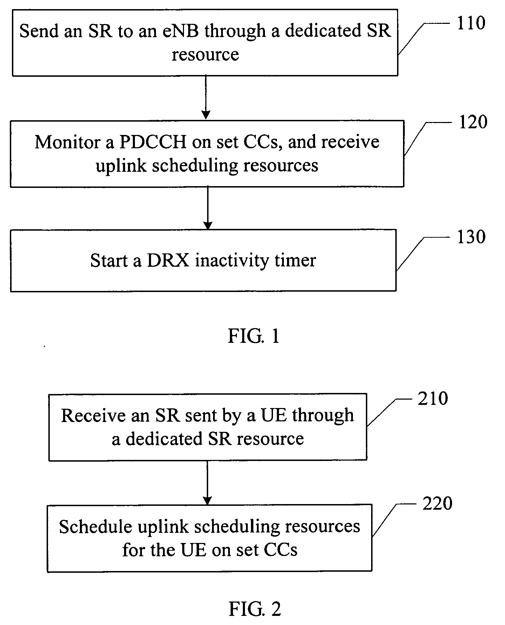

A first embodiment of the present invention provides a method for obtaining uplink resources. As shown in FIG. 1, the method includes the following steps:
Step 110: A UE sends an SR to an eNB through a dedicated SR resource.

Multiple CCs exist in an LTE-A system, and each CC has an independent PUCCH. Therefore, a dedicated SR resource can be configured for the UE on each CC. Generally, the UE of the LTE-A may configure a dedicated SR resource on only one CC. When the UE needs to send uplink data, the UE triggers a conventional Buffer Status Report (BSR). If no uplink scheduling resource is available now, the UE may send an SR to the eNB through the configured dedicated SR resource.
Step 120: The UE monitors the PDCCH on the set CCs, and receives uplink scheduling resources, for example, a UL Grant.

The set CCs include but are not limited to: a CC for sending the SR, an anchor CC, CCs not configured with the DRX mode, or one or multiple CCs preconfigured by the UE or eNB through signaling, where the signaling includes Radio Resource Control (RRC) signaling and Media Access Control (MAC) signaling.

In this embodiment, the uplink scheduling resources are received on the set CCs, thus solving the power waste problem caused when the UE receives the uplink scheduling resources on multiple CCs in the prior art.
Step 130: After receiving the uplink scheduling resources on the set CCs, the UE starts a DRX inactivity timer for the CC configured with the DRX mode or for part of the CCs, where the part of the CCs refers to all or part of the CCs in a CC group.

This step is optional. Specifically, within the time counted by the DRX inactivity timer, the UE receives the uplink scheduling resources allocated subsequently through the CC for which the DRX inactivity timer is started.

According to the DRX operation mode in the existing LTE system, when the UE receives the PDCCH signaling such as uplink scheduling resources from the eNB, the UE needs to start the inactivity timer to let the UE be active and receive the subsequent uplink scheduling resources.

In this embodiment, when multiple CCs exist, the UE receives the PDCCH signaling on the set CC. The PDCCH signaling carries uplink scheduling resources, and the uplink scheduling resources are primarily used by the UE for sending the BSR to the eNB. The UE may start the corresponding DRX inactivity timer for all CCs configured with the DRX mode. The UE keeps active within the time counted by the DRX inactivity timer, and can receive a subsequent new schedule through all CCs configured with the DRX mode; or, instead of starting a DRX inactivity timer for all CCs configured with the DRX mode, the UE starts the corresponding DRX inactivity timer for only part of the CCs, where the part of the CCs refers to one or multiple CCs in a CC group.

It should be noted that in this embodiment, the CC group can be sorted according to the logical channel group, and all CCs in a CC group correspond to the same logical channel; or, the CC group can be sorted according to the service over the CC, and all CCs in a CC group bear the same service. In this way, the eNB can schedule different services on different CC groups. By starting a DRX inactivity timer corresponding to a CC group, the UE can monitor whether there is any scheduling subsequently related to the service over the CC group, thus receiving the schedule in time without leading to a power waste. The preceding description about the CC group is applicable to other embodiments of the present invention, which is not repeatedly described in the following.

In this embodiment, the UE may start the corresponding DRX inactivity timer for the preconfigured CC only, and monitor whether there is any new uplink scheduling resource allocated subsequently in the running period of the DRX inactivity timer, thus further reducing power consumption of the UE.

A second embodiment of the present invention provides a method for scheduling uplink resources. As shown in FIG. 2, the method includes the following steps:
Step 210: An eNB receives an SR sent by a UE through a dedicated SR resource.
Step 220: The eNB schedules uplink scheduling resources for the UE on set CCs.

The set CCs include but are not limited to any one or combination of the following: a CC for receiving the SR, an anchor CC, CCs not configured with the DRX mode, or CC(s) preconfigured by the UE or eNB.

Specifically, the eNB may schedule the uplink scheduling resources for the UE on the CC for receiving the SR, an anchor CC, CCs not configured with the DRX mode, or a preconfigured CC. In this way, the UE can receive the uplink scheduling resources on set CCs.

In this embodiment, the eNB sends the uplink scheduling resources on the set CC. Therefore, the UE can monitor the set CC only, thus solving the power waste problem caused when the UE receives the uplink scheduling resources on multiple CCs in the prior art.

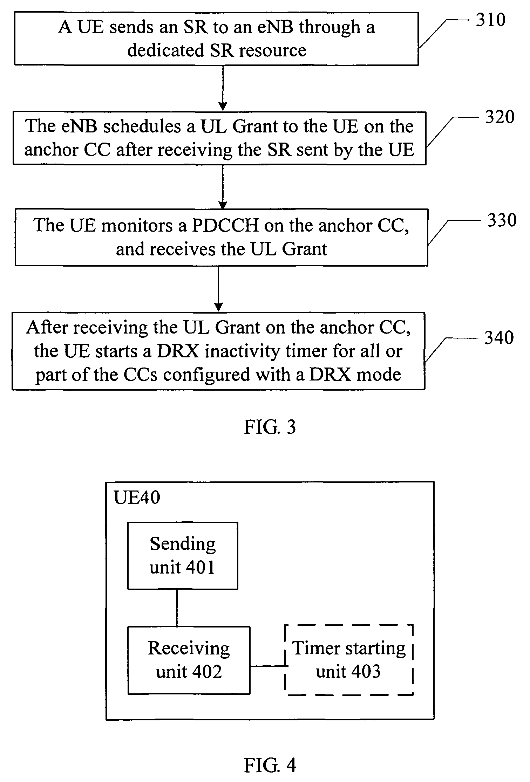

A third embodiment of the present invention describes the process of scheduling and obtaining the uplink scheduling resources, supposing that the anchor CC is the set CC. The anchor CC here refers to the anchor CC in multiple CCs. As shown in FIG 3, the method includes the following steps:
Step 310: A UE sends an SR to an eNB through a dedicated SR resource.
Step 320: After receiving the SR sent by the UE, the eNB schedules a UL Grant to the UE through the anchor CC. Through the UL Grant, the UE sends a BSR to the eNB.
Step 330: The UE monitors a PDCCH on the anchor CC, and receives the UL Grant.

In this case, the UE is in the active state only on the anchor CC, and monitors the PDCCH on the anchor CC to receive the UL Grant.
Step 340: After receiving the UL Grant on the anchor CC, the UE starts a DRX inactivity timer for all the CCs configured with the DRX mode so as to receive subsequent possible UL Grants.

For more details, see the description in the preceding first embodiment, which is not repeatedly described here.

In other embodiments of the present invention, the anchor CC may be other set CC. According to a protocol, default setting, or presetting of signaling, the eNB and the UE may determine the CC or CCs on which the UL Grant will be sent and received. For example, if the set CC is the a CC for sending the SR, the eNB sends the UL Grant on the CC for receiving the SR. Accordingly, the UE monitors the PDCCH on this CC and receives the UL Grant. If the default setting indicates that the UL Grant is sent and received on the CC not configured with the DRX mode, the UE receives the UL Grant on this CC. In another example, the eNB and the UE may preset a CC or certain CCs which can send and receive the UE Grant, the eNB sends the UL Grant on the preset CC, and the UE receives the UL Grant on this CC.

In this embodiment, the uplink scheduling resources are sent and received on the set CC, thus solving the power waste problem caused when the UE receives the uplink scheduling resources on multiple CCs in the prior art. Moreover, the UE may start the corresponding DRX inactivity timer for the preconfigured CC only, and monitor whether there is any new uplink scheduling resources allocated subsequently in the running period of the DRX inactivity timer, thus further reducing power consumption of the UE.

A fourth embodiment of the present invention provides a UE 40 to implement the method for obtaining uplink resource, where the method is provided in the foregoing embodiments. As shown in FIG 4, the UE 40 includes:
a sending unit 401, configured to send an SR to an eNB through a dedicated SR resource; and
a receiving unit 402, configured to monitor a PDCCH on set CCs after the sending unit sends the SR, and receive uplink scheduling resources. Specifically, the receiving unit 402 may monitor the PDCCH and receive the UL Grant on the a CC for sending the SR, or an anchor CC, or CCs not configured with the DRX mode, or a preconfigured CC, according to the presetting. The preconfigured CC may be the CC preconfigured by the UE or eNB.

The UE may further include a timer starting unit 403, which is configured to start a DRX inactivity timer for the CC configured with the DRX mode or for part of the CCs after the receiving unit 402 receives the uplink scheduling resources. The part of the CCs here may be all or part of the CCs in a CC group. The CC group may be a group of CCs sorted according to the logical channel group and/or service carried. For example, all CCs in a CC group correspond to the same logical channel, and/or bear the same service.

The foregoing modules implement the method for obtaining uplink resource, where the method is provided in the foregoing embodiments, and solve the power waste problem caused when the UE receives the uplink scheduling resources on multiple CCs in the prior art.

Another embodiment of the present invention also provides a communication system. The system includes a UE and an eNB which communicates with the UE. The UE may be the UE 40 provided in the foregoing embodiment.

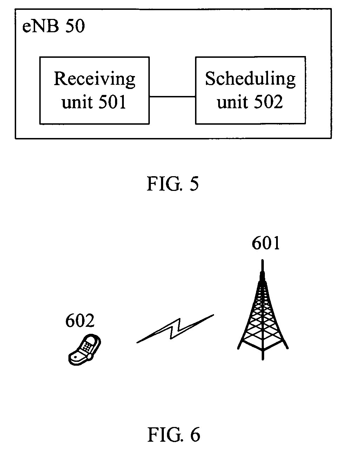

A fifth embodiment of the present invention provides an eNB 50 to implement the method for scheduling uplink resource, where the method is provided in the foregoing embodiments. As shown in FIG 5, the eNB 50 includes:
a receiving unit 501, configured to receive an SR sent by a UE through a dedicated SR resource; and
a scheduling unit 502, configured to schedule uplink scheduling resources for the UE on set CCs, where the set CCs, for example, include any one or combination of the following items: a CC for receiving the SR, an anchor CC, CCs not configured with the DRX mode, or a preconfigured CC.

In this embodiment, the scheduling unit schedules the uplink resources on the set CCs so that the UE reduces power consumption and avoids the power waste.

The foregoing modules implement the method for scheduling uplink resource, where the method is provided in the foregoing embodiments. For more details, see the description in such embodiments, which will not be repeated here.

Another embodiment of the present invention also provides a communication system. The system includes an eNB 601 and at least one UE 602 which communicates with the eNB. The eNB 601 may be the eNB 50 provided in the foregoing embodiments. FIG 6 shows an example of the communication system.

In the final analysis, in the embodiments of the present invention, if multiple CCs are configured with the DRX mode, the UE receives uplink resources on only the set CC after sending an SR, thus effectively avoiding the waste of power caused when the UE receives the uplink scheduling resources on multiple CCs in the prior art. Moreover, the UE starts the corresponding DRX inactivity timer only for the preconfigured CC, thus further reducing power consumption of the UE.

Persons of ordinary skill in the art understand that all or part of the steps of the method in the embodiments of the present invention may be implemented by a program instructing relevant hardware. The program may be stored in a computer readable storage medium such as a Read Only Memory/Random Access Memory (ROM/RAM), a magnetic disk or a Compact Disk Read-Only Memory (CD-ROM).

The preceding embodiments give further detail description of the objectives, technical solutions and merits of the embodiments of the present invention. Although the invention has been described through some exemplary embodiments, the invention is not limited to such embodiments. Any modification or variation to the invention without departing from the scope of the invention shall fall within the scope of protection defined by the following claims or their equivalents.

## Claims

1. A method for obtaining uplink resources, implemented by a UE, comprising:
sending, by the UE, a Scheduling Request, SR, to an evolved NodeB, eNB, through a dedicated SR resource; **characterized by**
monitoring, by the UE, a Physical Downlink Control Channel, PDCCH, on set Component Carriers, CCs, and receiving, by the UE, uplink scheduling resources after sending the SR to the eNB through the dedicated SR resource, wherein:
the set CCs comprise any one or combination of the following items: a CC for sending the SR, or an anchor CC, or CCs not configured with a Discontinuous Reception, DRX, mode, or a preconfigured CC; and
after receiving, by the UE, the uplink scheduling resources, the method further comprises:
starting, by the UE, a DRX inactivity timer for all or part of CCs in a CC group to receive a subsequent new uplink scheduling resource.

2. The method according to claim 1, wherein:
all CCs in the CC group correspond to a same logical channel, and/or bear a same service.

3. The method according to claim 1, wherein the preconfigured CCs comprise:
a CC preconfigured by a User Equipment, UE, or a CC preconfigured by the eNB.

4. A User Equipment, UE, comprising:
a sending unit, configured to send a Scheduling Request, SR, to an evolved NodeB, eNB, through a dedicated SR resource;
**characterized in that** the UE further comprises a receiving unit, configured to: monitor a Physical Downlink Control Channel, PDCCH, on set Component Carriers, CCs, and receive uplink scheduling resources after the sending unit sending the SR to the eNB through the dedicated SR resource, wherein the set CCs comprise any one or combination of the following items: a CC for sending the SR, or an anchor CC, or CCs not configured with a Discontinuous Reception, DRX, mode, or a preconfigured CC; and
a timer starting unit, configured to start a DRX inactivity timer for all or part of CCs in a CC group after the receiving unit receives the uplink scheduling resources to receive a subsequent new uplink scheduling resource.

5. A communication system, comprising a User Equipment, UE, specified in claim 4.

## Patentansprüche

1. Verfahren zum Erlangen von Aufwärtsverbindungsressourcen, das durch ein UE implementiert wird und Folgendes umfasst:
Senden eines "Scheduling Request", SR, durch das UE über eine dedizierte SR-Ressource an eine "Evolved Node B", eNB; **gekennzeichnet durch** Überwachen eines "Physical Downlink Control Channel", PDCCH, auf festgelegten "Component Carriers", CCs, **durch** das UE und Empfangen von Ressourcen für ein "Scheduling" auf einer Aufwärtsverbindung **durch** das UE nach dem Senden des SR über die dedizierte SR-Ressource an die eNB, wobei:
die festgelegten CCs ein beliebiges oder eine beliebige Kombination der folgenden Elemente umfassen: einen CC zum Senden des SR oder einen Anker-CC oder CCs, die nicht mit einem Modus für "Discontinuous Reception", DRX, konfiguriert sind, oder einen vorkonfigurierten CC; und
das Verfahren nach dem Empfangen der Ressourcen für ein "Scheduling" auf einer Aufwärtsverbindung **durch** das UE ferner Folgendes umfasst:
Starten eines DRX-Inaktivitätszeitgebers für alle oder einen Teil der CCs in einer CC-Gruppe **durch** das UE, um eine nachfolgende neue Ressource für ein "Scheduling" auf einer Aufwärtsverbindung zu empfangen.

2. Verfahren nach Anspruch 1, wobei:
alle CCs in der CC-Gruppe einem selben logischen Kanal entsprechen und/oder einen selben Dienst übermitteln.

3. Verfahren nach Anspruch 1, wobei die vorkonfigurierten CCs Folgendes umfassen:
einen CC, der durch ein Benutzerendgerät, UE, vorkonfiguriert ist, oder einen CC, der durch die eNB vorkonfiguriert ist.

4. Benutzerendgerät, UE, das Folgendes umfasst:
eine Sendeeinheit, die konfiguriert ist, um einen "Scheduling Request", SR, über eine dedizierte SR-Ressource an eine "Evolved Node B", eNB, zu senden;
**dadurch gekennzeichnet, dass** das UE ferner eine Empfangseinheit umfasst, die konfiguriert ist, um: einen "Physical Downlink Control Channel", PDCCH, auf festgelegten "Component Carriers", CCs, zu überwachen und Ressourcen für ein "Scheduling" auf einer Aufwärtsverbindung zu empfangen, nachdem die Sendeeinheit den SR über die dedizierte SR-Ressource an die eNB gesendet hat, wobei die festgelegten CCs ein beliebiges oder eine beliebige Kombination der folgenden Elemente umfassen: einen CC zum Senden des SR oder einen Anker-CC oder CCs, die nicht mit einem Modus für "Discontinuous Reception", DRX, konfiguriert sind, oder einen vorkonfigurierten CC; und
eine Zeitgeberstarteinheit, die konfiguriert ist, um einen DRX-Inaktivitätszeitgeber für alle oder einen Teil der CCs in einer CC-Gruppe zu starten, nachdem die Empfangseinheit die Ressourcen für ein "Scheduling" auf einer Aufwärtsverbindung empfangen hat, um eine nachfolgende neue Ressource für ein "Scheduling" auf einer Aufwärtsverbindung zu empfangen.

5. Kommunikationssystem, das ein Benutzerendgerät, UE, nach Anspruch 4 umfasst.

## Revendications

1. Procédé permettant d'obtenir des ressources de liaison montante, mis en oeuvre par un UE, comprenant les étapes suivantes :
envoyer, par l'UE, une requête de planification, SR, à un NoeudB évolué, eNB, par l'intermédiaire d'une ressource SR dédiée ; **caractérisé par**
contrôler, par l'UE, un canal de contrôle de liaison descendante physique, PDCCH, sur des porteuses composantes, CC, définies et recevoir, par l'UE, des ressources de planification de liaison montante après avoir envoyé la SR à l'eNB par l'intermédiaire de la ressource SR dédiée :
les CC définies comportant l'un quelconque ou une combinaison des éléments suivants : une CC destinée à envoyer la SR, ou une CC ancre, ou des CC non configurées avec un mode de réception discontinue, DRX, ou une CC préconfigurée ; et
après avoir reçu, par l'UE, les ressources de planification de liaison montante, le procédé comprend en outre :
mettre en route, par l'UE, une horloge d'inactivité DRX pour la totalité ou une partie des CC dans un groupe CC pour recevoir une nouvelle ressource de planification de liaison montante subséquente.

2. Procédé selon la revendication 1, dans lequel :
toutes les CC dans le groupe CC correspondent à un même canal logique, et/ou portent un même service.

3. Procédé selon la revendication 1, dans lequel les CC préconfigurées comprennent :
une CC préconfigurée par un équipement utilisateur, UE, ou une CC préconfigurée par l'eNB.

4. Équipement utilisateur, UE, comprenant :
une unité d'envoi, configurée pour envoyer une requête de planification, SR, à un NoeudB évolué, eNB, par l'intermédiaire d'une ressource SR dédiée ;
**caractérisé en ce que** l'UE comporte en outre une unité de réception, configurée pour : contrôler un canal de contrôle de liaison descendante physique, PDCCH, sur des porteuses composantes, CC, définies et recevoir des ressources de planification de liaison montante après que l'unité d'envoi a envoyé la SR à l'eNB par l'intermédiaire de la ressource SR dédiée, les CC définies comportant l'un quelconque ou une combinaison des éléments suivants : une CC destinée à envoyer la SR, ou une CC ancre, ou des CC non configurées avec un mode de réception discontinue, DRX, ou une CC préconfigurée ; et
une unité de mise en route d'horloge, configurée pour mettre en route une horloge d'inactivité DRX pour la totalité ou une partie des CC dans un groupe CC après que l'unité de réception a reçu les ressources de planification de liaison montante pour recevoir une nouvelle ressource de planification de liaison montante subséquente.

5. Système de communication, comprenant un équipement utilisateur, UE, spécifié dans la revendication 4.
